# EUROPÄISCHE PATENTSCHRIFT

(11) **EP 2 132 274 B1**
(45) Veröffentlichungstag und Bekanntmachung des Hinweises auf die Patenterteilung: **11.04.2012**
(21) Anmeldenummer: 08701367.8
(22) Anmeldetag: 10.01.2008
(51) Int. Cl.: C09J 9/00, C09J 11/02, C09J 201/00

(54) **EIN-KOMPONENTEN-MONTAGEKLEBSTOFF MIT HOHER ANFANGSHAFTUNG**
ONE-COMPONENT STRUCTURAL ADHESIVE HAVING HIGH INITIAL ADHESION
COLLES D'ASSEMBLAGE À UN COMPOSANT, PRÉSENTANT UNE ADHÉRENCE INITIALE ÉLEVÉE

(30) Priorität: 09.03.2007 DE 102007011511
(43) Veröffentlichungstag der Anmeldung: 16.12.2009
(73) Patentinhaber: Henkel AG & Co. KGaA, 40589 Düsseldorf (DE)
(72) Erfinder: BECK, Horst, 41470 Neuss-Rosellen (DE); BACHON, Thomas, 40597 Düsseldorf (DE); HERMSDORF, Nadja, 76530 Baden-Baden (DE); KOSTYRA, Sebastian, 40789 Monheim (DE); MAJOLO, Martin, 41812 Erkelenz (DE)
(86) Internationale Anmeldenummer: PCT/EP2008/050209
(87) Internationale Veröffentlichungsnummer: WO 2008/110394

(56) Entgegenhaltungen:
- EP-A- 1 531 172
- EP-A- 1 548 080
- WO-A-01/74961
- GB-A- 1 217 919

## Beschreibung

Die Erfindung betrifft Ein-Komponenten-Montageklebstoffe mit hoher Anfangshaftung, sowie ein Verfahren zu deren Herstellung.

Eine bevorzugte Anwendung von Montageklebstoffen ist das schnelle und dauerhafte Befestigen von Gegenständen an Decken, Wänden und Böden. Besonders erwünscht ist dabei die schnelle und einfache Montage schwerer Gegenstände, ohne dass nach dem Auftragen der Klebemasse eine zusätzliche Fixierung notwendig ist. Auch sollten die Klebemassen in der Lage sein, Materialunebenheiten oder Spalten zwischen den zu verklebenden Teilen zu überbrücken.

Unter einem Montageklebstoff wird eine Zusammensetzung verstanden, die sich aufgrund ihrer sehr hohen Anfangshaftung bei einer guten Belastbarkeit der Verklebung von Holz, Metall, Keramik, PVC und weiteren Kunststoffen im Innen- und Außenbereich, aber auch ihren besonderen Fähigkeiten bezüglich Spaltüberbrückung, Haftungsspektrum und Flexibilität zur Montage vor allem in der Bauindustrie eignet.

Die bisher auf dem Markt bekannten Montagekleber haben eine maximale Anfangshaftung von 30 g/cm². Damit ist zwar eine Montage von Gegenständen ohne die zusätzliche Fixierung des Gegenstandes möglich, allerdings treten Probleme auf, wenn es sich um besonders schwere Gegenstände handelt. Weitere Montageprobleme gibt es bei der Montage von Gegenständen, die unter Spannung stehen (z. B. gebogene Fußleisten). Diese Gegenstände müssen zusätzlich fixiert werden, bis die Klebemasse ausgehärtet ist. Solche Montageanwendungen sind immer mit einem zeitraubenden, teilweise auch komplizierten Mehraufwand verbunden.

Man unterscheidet vier Arten von Montageklebem: a) lösemittelhaltige Systeme, b) reaktive Systeme, c) Schmelzklebstoffe (Hotmelts), und d) wasserbasierte Systeme.

Vorteile lösemittelhaltiger Montagekleber liegen darin, dass das vorhandene Lösemittel schnell aus der Klebemasse entweichen kann und so relativ schnell eine hohe Haftung für Montagearbeiten erzielt werden kann.

Reaktive Systeme und Hotmelts benötigen zur Verarbeitung entweder Spezialbedingungen oder -geräte oder sie brauchen eine relativ lange Zeit, um genügende Haftungseigenschaften für Montagearbeiten zu entwickeln.

Herkömmliche wasserbasierte Systeme haben den Nachteil, das vorhandene Wasser nur langsam abzugeben. Der Aushärtevorgang der Klebemasse ist daher relativ langsam. Der Vorteil der wasserbasierten Systeme liegt allerdings darin, dass keine Geruchsbelästigungen oder/und Gesundheitsgefahrdungen durch freigesetzte Lösemittel auftreten. Allerdings gibt es bisher keine Montagekleber mit hohen Anfangshaftungswerten von mehr als 30 g/cm², insbesondere mehr als 40 g/cm².

In der GB 2 061 990 wird ein gleichmaßig ausstreichbarer Klebstoff zum Fixieren von Keramik-Fliesen beschrieben. Er enthält 2 bis 50 Gew.% einer wässrigen Dispersion oder Lösung eines organischen Polymeren mit einem Feststoff-Anteil von 30 bis 70 %, 40 bis 80 Gew.% eines anorganischen Füllstoffes, 0,5 bis 15 Gew.% eines organischen Additivs und 0 bis 10 Gew.% an Hilfsstoffen. Als organische Verdickungsmittel werden neben Celluloseethern auch Polyacrylate genannt. Mit diesem Klebstoff sollen Keramik-Fliesen auf dem Boden fixiert werden. Nachteilig an diesem bekannten Klebstoff ist, dass seine Anfangshaftung noch zu gering ist, um schwere Gegenstände wie beispielsweise Ziegel an Wänden sofort nach dem Egalisieren des Klebstoffes zu fixieren.

Diesem Ziel näher kommt der in der internationalen Patentanmeldung WO 01/74961 auf der Basis einer wässrigen Dispersion beschriebene Montageklebstoff. Dabei wird ein anorganisches Verdickungsmittel eingesetzt, um eine streichfähige Formulierung zu erhalten, die sich aus einer Kartusche auftragen lässt und die Anfangshaftungswerte von bis zu 30 g/cm² besitzt.

Aufgabe der vorliegenden Erfindung war es Montageklebstoffe bereit zu stellen, die eine gegenüber den bekannten Montageklebstoffen höhere Anfangshaftung aufweisen, lagerstabil sind und spaltüberbrückend im Innen- und Außenbereich auf unterschiedlichsten Substraten universell angewendet werden können.

Der Montageklebstoff der vorliegenden Erfindung sollte daher eine Fixierung der miteinander zu verklebenden Teile vor deren Aushärtung überflüssig machen und eine einem Haftklebstoff ähnliche Anfangshaftung aufweisen. Im Gegensatz zu einem Haftklebstoff, sollte der Montageklebstoff jedoch durch Aushärtung eine höhere Endfestigkeit erreichen.

Überraschenderweise wurde gefunden, dass obige Aufgaben durch Bereitstellen eines Ein-Komponenten-Montageklebstoffs gelöst werden, der eine Fließgrenze von mindestens 1500 Pa und eine Anfangshaftung von mehr als 30 g/cm² aufweist und welcher mindestens ein Bindemittel, ausgewählt aus der Gruppe bestehend aus Polyurethan-Präpolymeren und über Silylgruppen vernetzenden Systemen, und mindestens ein Verdickungsmittel und/oder mindestens einen Füllstoff enthält.

Die erfindungsgemäßen Klebstoffen unterscheiden sich von denen aus der GB 2061990 und der WO 01/74961 bekannten Klebstoffen durch ihre deutlich höhere Anfangshaftung von mehr als 30 g/cm², vorzugsweise mehr als 40 g/cm², besonders bevorzugt von mehr als 50, 100, 150 oder gar mehr als 200 oder mehr als 300 g/cm².

Derartige erfindungsgemäße Klebstoffe lassen sich durch Zugabe von Verdickungsmitteln und Füllstoffen zu konventionellen Montageklebstoffen aller vier oben genannten Arten erhalten. Hierbei werden vorzugsweise formstabile Massen erhalten, die eine hohe Fließgrenze von mindestens 1500 Pa, vorzugsweise mindestens 1800 Pa, besonders bevorzugt mindestens 2000, 2500 oder gar 3000 Pa besitzen.

Bevorzugt handelt es sich bei den erfindungsgemäßen Montageklebstoffen um wässrige, lösemittelhaltige oder gemischt wässrig-lösemittelhaltige Zusammensetzungen.

Besonders bevorzugt handelt es sich bei den erfindungsgemäßen Montageklebstoffen um reaktive Systeme.

Im Gegensatz zu den aus der GB 2061990 und der WO 01/74961 beschriebenen Formulierungen sind die erfindungsgemäßen Montageklebstoffe üblicherweise nicht streichfähig. Sie lassen sich daher üblicherweise nicht aus Kartuschen ausdrücken und besitzen keine cremige Konsistenz, die eine leichte Egalisierung ermöglicht.

Die erfindungsgemäßen Montageklebstoffe zeichnen sich vielmehr vorzugsweise durch eine derartige Formstabilität aus, dass die beim Ausdrücken aus einer Kartusche üblichen Scherkräfte nicht ausreichen würden, diesen manuell aus einer Kartusche zu drücken. Die erfindungsgemäßen Montageklebstoffe besitzen daher eine Extrusionsrate von vorzugsweise s 100 g/min, besser s 70 g/min oder s 50 g/min, besonders bevorzugt s 40 g/min und ganz besonders bevorzugt bei ≤ 30 g/min nach ISO 9048 (Druck: 2 bar, Temperatur 23 °C, 50 % rel. Luftfeuchte, Extrusions-Vorrichtung mit einem inneren Durchmesser von 5,0 cm, einer Länge von 18 cm und einem Düsendurchmesser von 4 mm).

Die erfindungsgemäßen Montageklebstoffe sind vorzugsweise knetbar und können so spaltüberbrückend eingesetzt werden. Ihre Aushärtung erfolgt vorzugsweise im Wesentlichen blasenfrei.

Unter "blasenfrei" wird verstanden, dass das Material keine sichtbare Schaumentwicklung aufweist.

Unter dem Begriff "knetbar" wird verstanden, dass die Montageklebstoffe durch Fingerkraft verformbar sind, d.h. durch Einwirkung einer Kraft von maximal 100 N, vorzugsweise maximal 50 N, besonders bevorzugt maximal 30 N auf einen würfelförmigen Substanzkörper des Ein-Komponenten-Montageklebstoffs von 1 cm Kantenlänge. Der würfelförmige Substanzkörper des Ein-Komponenten-Montageklebstoffs kann als "formstabil" bezeichnet werden, d.h. dass dieser ohne Einwirkung einer äußeren Kraft seine Würfelform behält. Somit fallen beispielsweise pastöse, zerfließende Materialen nicht unter den Begriff "knetbar".

Der erfindungsgemäße Montageklebstoff kann in beliebiger Weise konfektionierte werden. So zum Beispiel in Form von Strängen, Stangen, Bändern, Platten, Folien und dergleichen.

Eine bevorzugte Konfektionierung des erfindungsgemäßen Montageklebstoffs sind beispielsweise Klebepads, bestehend aus dem Montageklebstoff. Diese sind in beliebiger Dicke wie beispielsweise 0,1 bis 10 mm, vorzugsweise 1 bis 10 mm, besonders bevorzugt 2 bis 5 mm und beliebiger Form wie beispielsweise Streifen, Scheiben und dergleichen herstellbar. Sie lassen sich vorzugsweise in so genannten Monodose-Verpackungen, wie sie beispielsweise aus dem Arzneimittelbereich als Sichtverpackungen bekannt sind, verpacken. Auf diese Weise lassen sich insbesondere solche erfindungsgemäßen Montageklebstoffe verpacken, die durch Feuchtigkeit härten.

Die Konfektionierung in Monodose-Verpackungen besitzt den Vorteil, dass die Klebstoffpads einzeln entnehmbar sind und für spezielle Anwendungen aufgrund ihrer Formstabilität beliebig vorgeformt erhältlich sind.

Die erfindungsgemäßen Montageklebstoffe lassen sich auch in Plattenform beliebiger Größe und Dicke, gegebenenfalls auf einem Träger aufgebracht in Rollenform konfektionieren und bei Gebrauch Zurechtschneiden oder Stanzen. Auf diese Weise ist es auch möglich, das zu verklebende Material auf die Klebstoffschicht zu legen, die Konturen des zu verklebenden Materials mit einem Messer zu verfolgen, den Träger zu entfernen und das mit der Klebstoffschicht versehene zu verklebende Material an Decken, Wänden und dergleichen zu befestigen.

Als Bindemittelbestandteile des Montageklebstoffs werden Bindemittel eingesetzt, die aus der Gruppe bestehend aus Polyurethan-Präpolymeren und über Silylgruppen vernetzenden Systemen ausgewählt sind. Es sind vor allem 1-Komponenten-Klebstoffe geeignet. Als "1-Komponenten-Klebstoffe" sind insbesondere solche Klebstoffe zu verstehen, die durch Veränderung der Umgebungsbedingungen aushärten. Dies kann beispielsweise durch Temperaturerhöhung, Zutritt von Luftfeuchtigkeit, Ausschluss von Luftsauerstoff oder Kontakt mit der Substratoberfläche geschehen. Die aus der Umgebung stammende Härterkomponente wie beispielsweise das Wasser der Luftfeuchtigkeit führt somit nicht zur Eingruppierung als 2-Komponenten-Klebstoff. 1-Komponenten-Klebstoffe können daher auch mehrere bereits miteinander vermischte Komponenten enthalten, die unter Lagerbedingungen stabil sind und erst durch Veränderung der Umgebungsbedingungen bei deren Applikation härten. Hierunter können beispielsweise reaktive Harzkomponenten bzw. Bindemittelkomponenten wie beispielsweise Polyole (zum Beispiel Acclaim 2200N der Firma Bayer, Leverkusen) fallen. Im Allgemeinen sind 1-Komponenten-Klebstoffe vom Verbraucher ohne Abmischung mit zusätzlichen Komponenten, wie beispielsweise Härtern einsatzfähig. So zählen beispielsweise auch Zusammensetzungen, die silylterminierte Polymere und Polyol enthalten oder aus Polyurethanpräpolymeren bestehen zu den 1-Komponentenklebstoffen, da erst der Zutritt von Luftfeuchtigkeit zu deren Härtung führt.

Beispiele für Polyurethanpräpolymere in 1-Komponenten-Klebstoffe sind beispielsweise aus der WO 03/066700 A1 bekannt, über Silylgruppen feuchtigkeitsvernetzende Polymere sind beispielsweise aus der US 3971751, EP 1093482 A1, US 7009022 B2, US 6756465 B1, DE 10152505 A1 und DE 10350481 A1 bekannt.

Als silylterminierte Polymere sind für den Einsatz in den erfindungsgemäßen Montageklebstoffen besonders solche der allgemeinen Formel (I) einsetzbar:

R-[A-R³-SiR¹ₓ(OR²)₃₋ₓ]ₙ (I)

wobei R ein organisches Grundgerüst ist, A ein Sauerstoffatom, eine Alkylen-Gruppe, wie beispielsweise Methylen-Gruppe oder eine Carboxy-, Carbamat-, Carbonat-, Ureido-, Urethan- oder Sulfonat-Gruppe ist, R¹ ein Alkyl-Rest mit 1 bis 4 Kohlenstoffatomen, R² ein Alkyl-Rest mit 1 bis 4 Kohlenstoffatomen oder ein Acyl-Rest mit 1 bis 4 Kohlenstoffatomen ist, R³ ein geradkettiger oder verzweigter, substituierter oder unsubstituierter Alkylen-Rest mit 1 bis 8 Kohlenstoffatomen ist, x = 0 bis 2 ist und n = 1 bis 10000 ist, wobei die Silyl-Reste gleich oder verschieden sind und im Falle von mehreren Resten R¹ und/oder R² diese jeweils gleich oder verschieden sind.

Bevorzugt sind die in der WO 2005047394 A1 und EP 1093482 B1 beschriebenen silyterminierten Polymere.

Der Bindemittelanteil der erfindungsgemäßen Montageklebstoffe beträgt vorzugsweise 10 bis 75 Gew.-%, besser 30 bis 75 Gew.-%, bevorzugt 40 bis 75 Gew.-% und besonders bevorzugt 45 bis 70 Gew.-% und besonders bevorzugt 50 bis 70 Gew.-% bezogen auf das Gesamtgewicht der Montageklebstoffzusammensetzung.

Bei den im efindungsgemäßen Montageklebstoff eingesetzten Verdickungsmitteln handelt es sich vorzugsweise um hochmolekulare, meist organische Stoffe, die Flüssigkeiten, wie beispielsweise Wasser und/oder organische Lösungsmittel aufsaugen, dabei aufquellen oder intermolekulare Gitterstrukturen bilden. Füllstoffe, die Flüssigkeiten aufsaugen, dabei aufquellen oder intermolekulare Gitterstrukturen bilden, also als Verdickungsmittel bzw. Verdicker wirken, werden im Rahmen der vorliegenden Erfindung als Verdickungsmittel betrachtet.

Als Verdickungsmittel sind insbesondere organische natürliche Verbindungen, wie beispielsweise Agar-Agar, Carrageen, Tragant, Gummi Arabicum, Alginate, Pektine, Polyosen, Guar-Mehl, Johannisbrotbaumkernmehl, Stärke, Dextrine, Gelatine und Casein, organische abgewandelte Naturstoffe, wie beispielsweise Carboxymethylcellulosen und andere Celluloseether, Hydroxyethylcellulose, Hydroxypropylcellulose und dergleichen sowie Kernmehlether, gehärtetes Rizinusöl, Stearinsäure, organische vollsynthetische Verbindungen wie Polyacryl- und Polymethacrylate, Vinylpolymere, Polycarbonsäuren, Polyether, Polyimine und Polyamide, und anorganische Verbindungen, wie beispielsweise Polykieselsäuren, Tonmineralien wie Montmorillonite, Zeolithe und Kieselsäuren zu nennen.

Beispiele organischer Verdickungsmittel sind unter anderem auch (wässrige Lösungen von) Copolymere auf der Basis von Acrylsäure und/oder Acrylamid, beispielsweise emulgiert in einer Ölfraktion, insbesondere einer Erdölfraktion. Konkrete Beispiele für eine W/O-Emulsion sind Collacral HP der Firma BASF sowie Texipol-Typen der Fa. Scott-Bader. Weitere käuflich erhältliche Verdickungsmittel sind beispielsweise Disparlon®-Typen, wie beispielsweise Disparlon® 6500. Andere organische Verdickungsmittel sind beispielsweise der wasserlösliche Polyurethan-Verdicker Nopco DSX 3290 der Firma Cognis, Assoziativverdicker wie beispielsweise die wässrige Lösung des Terpolymeren aus Acrylaten und Methacrylaten sowie Carboxylgruppen enthaltenden Comonomeren Indunal T 112 der Firma Indulor Chemie (dabei handelt es sich um einen anionischen Assoziativverdicker), alkaliquellbare Verdicker, wie beispielsweise die Acrylatpolymer-Dispersion Acrysol TT 615 der Firma Rohm & Haas (dabei handelt es sich um eine alkaliquellbare anionische Dispersion mit einem Feststoffgehalt von ca. 30 Gew.-%), und Polymerdispersionen auf der Basis von Acrylsäure und Acrylamid.

Besonders als organische Verdickungsmittel geeignet sind nicht-reaktive Verdicker wie Amidwachse, so zum Beispiel Crayvallac SLX der Firma Cray Valley.

Beispiele anorganischer Verdickungsmittel sind vorzugsweise hochdisperse, insbesondere pyrogene Kieselsäuren, sei es in hydrophiler oder in hydrophober Form. Die bevorzugte hydrophile Kieselsäure ist wasserbenetzbar und fällt bei der Flammenhydrolyse an. Die hydrophobe Kieselsäure erhält man daraus, beispielsweise durch Reaktion mit Organosilanen. Die Oberfläche liegt vorzugsweise im Bereich von 125 bis 400 m²/g, gemessen nach der BET-Methode gemäß DIN 66131. Die hochdisperse Kieselsäure kann sowohl als Pulver als auch als wässrige Dispersion eingesetzt werden. Beispiel sind: HDK der Firma Wacker und Aerosil der Firma Degussa-Hüls.

Der bevorzugte Anteil an Verdickungsmitteln bezogen auf das Gesamtgewicht des Montageklebstoffs beträgt 5 bis 50 Gew.-%, besonders bevorzugt 5 bis 40 und ganz besonders bevorzugt 8 bis 40 Gew.-% beziehungsweise 10 bis 35 Gew.-%.

Füllstoffe dienen neben deren erfindungsgemäßer Aufgabe, das heißt der Rheologiebeeinflussung unter anderem dazu, den Schwund zu reduzieren. Es können sowohl organische als auch anorganische Füllstoffe eingesetzt werden, wobei die anorganischen Füllstoffe bevorzugt sind. Zu den anorganischen Füllstoffen zählen insbesondere Silikate, wie beispielsweise natürliche, plättchenförmige Magnesiumsilikathydrate, natürliche Aluminiumsilikathydrate und natürliche Kaliumaluminiumsilikathydrate, Carbonate, wie beispielsweise natürliche Calciumcarbonate in kristalliner Form oder aus Schalenresten, gefällte Calciumcarbonate und natürliche Calcium-Magnesiumcarbonate, Sulfate, wie beispielsweise natürliche oder synthetische Bariumsalze, synthetische oder natürliche Kieselsäuren, die gegebenenfalls auch als Verdickungsmittel wirken können, und eine Vielzahl weiterer Substanzen wie beispielsweise Graphit oder Eisenglimmer.

Konkrete Beispiele für Füllstoffe sind insbesondere die Kreide-Typen Omyacarb der Firma Omya, oder Füllstoffpartikel aus Andalusit, Sillimanit, Kyanit, Mullit, Pyrophyllit, Imogolit oder Allophan. Weiterhin geeignet sind Verbindungen auf der Basis von Natriumaluminaten oder Calciumsilikaten. Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, Bariumsulfat, Titandioxid, Zeolithe, Leucit, Kalifeldspat, Biotit, die Gruppe der Soro-, Cyclo-, Ino-, Phyllo- und Tektosilikate, die Gruppe der schwer löslichen Sulfate, wie Gips, Anhydrit oder Schwerspat, sowie Calciummineralien, wie Calcit oder Kreide (CaCO₃). Die genannten anorganischen Materialien können einzeln eingesetzt werden. Es ist jedoch ebenso gut möglich, ein Gemisch aus zwei oder mehreren der genannten Verbindungen einzusetzen.

Der bevorzugte Anteil an Füllstoffen bezogen auf das Gesamtgewicht des Montageklebstoffs beträgt 0 bis 50 Gew.-%, besonders bevorzugt 5 bis 40 und ganz besonders bevorzugt 10 bis 35 Gew.-%.

Mit dem mindestens einen Verdickungsmittel und/oder mindestens einen Füllstoff wird die Fließgrenze des Montageklebstoffs mindestens auf einen Wert von mindestens 1500 Pa eingestellt. Vorzugsweise liegt dieser Wert wie oben angegeben jedoch höher und kann beispielsweise mindestens 1800 Pa, besonders bevorzugt mindestens 2000, 2500, 3000, 4000, 6000, 8000 oder über 10000 Pa wie beispielsweise 12000 Pa betragen.

Vorzugsweise wird der Montageklebstoff mit dem Verdickungsmittel soweit eingedickt, bis dessen Konsistenz formstabil und die Montageklebstoffmasse knetbar ist. Ein darüber hinausgehender Zusatz von Verdickungsmittel und/oder Füllstoff kann aus wirtschaftlichen Gründen sinnvoll sein, da Verdickungsmittel und Füllstoffe üblicherweise preisgünstiger sind als das im Montageklebstoff enthaltene Bindemittel. Eine Obergrenze wird lediglich durch die Benetzbarkeit der zu verklebenden Substrate erreicht. Bei zu hohen Verdickungsmittel- und/oder Füllstoffanteilen wird substratabhängig die Benetzbarkeit der zu verklebenden Substrate herabgesetzt und das Verklebungsergebnis ungenügend. Die Obergrenze lässt sich für jedes Substrat in einfacher Weise durch wenige Experimente ermitteln.

Als Substrate geeignet sind beispielsweise Kunststoff, Holz, Metall, Textilien aus gewebten oder ungewebten Fasern, Estrich, Beton, zementäre Ausgleichsmassen oder Ausgleichsmassen auf Gipsbasis oder Keramik.

Im Allgemeinen ist es ratsam, das die Summe aus Verdickungsmittel- und Füllstoffanteil bezogen auf das Gesamtgewicht des Montageklebstoffs 60 Gew.-%, vorzugsweise 50 Gew.-% und besonders bevorzugt 45 oder 40 Gew.-% nicht überschreitet und vorzugsweise mindestens 20 Gew.-%, besser mindestens 25 Gew.-% und am besten mindestens 30 Gew.-% beträgt.

Als weitere Additive können die erfindungsgemäßen Montageklebstoffe beispielsweise Härtungskatalsatoren, wie Dibutylzinndilaurat (DBTL), Haftvermittler wie Silanhaftvermittler, Farbstoffe, Pigmente und Weichmacher enthalten. Pigmente, die Flüssigkeiten aufsaugen, dabei aufquellen oder intermolekulare Gitterstrukturen bilden, also als Verdickungsmittel bzw. Verdicker wirken, werden im Rahmen der vorliegenden Erfindung als Verdickungsmittel betrachtet.

Weiterer Gegenstand der vorliegenden Erfindung ist ein Verfahren zur Herstellung der erfindungsgemäßen Montageklebstoffe. Die einzelnen Komponenten des erfindungsgemäßen Montageklebstoffs können prinzipiell in beliebiger Reihenfolge miteinander vermischt werden. Um eine möglichst homogene Klebstoffmasse zu erhalten kann es bevorzugt sein, einen oder mehrere Bestandteile in gelöster, vordispergierter, voremulgierter oder geschmolzener Form, gegebenenfalls bei erhöhter Temperatur von vorzugsweise mindestens 50 °C besonders bevorzugt mindestens 80 °C miteinander zu vermischen. Wenn insbesondere bei hohen Verdickungsmittel- und/oder Füllstoffanteilen knetbare Massen erhalten werden, empfiehlt sich der Einsatz eines Kneters zur Vermischung.

Weiterer Gegenstand der Erfindung ist die Verwendung der erfindungsgemäßen Montageklebstoffe zur Verklebung diverser Materialien beziehungsweise Substrate wie beispielsweise Fliesen, Holz, Metallen, Kunststoffen, Keramik, Glas, lackierten Flächen und dergleichen.

Bei einer Verklebung zweier Holzstücke nach DIN EN 205 (Anhang A, 2,5 x 2 cm Klebefläche) werden mit den erfindungsgemäßen Montageklebstoffen Endfestigkeiten (Zugscherfestigkeiten) von vorzugsweise mindestens 1,5 N/mm², besonders bevorzugt mindestens 2,0 N/mm² und ganz besonders bevorzugt mindestens 3,0 N/mm² erreicht.

Im Rahmen der vorliegenden Erfindung werden die Anfangshaftung, die Fließgrenze sowie die Zugscherfestigkeit nach den im Folgenden beschriebenen Methoden bestimmt:

### Methode zur Bestimmung der Anfangshaftung

Auf einem 15 x 3 cm langen Prüfkörper aus unbehandeltem Holz (Buchensperrholz) mit einem 8 mm großen Loch an einer Seite wird eine Markierung angebracht. Die Markierungslinie ist 10 cm von der 3 cm langen Seite entfernt, die nicht mit einem Loch durchbohrt ist: Auf die markierte Fläche von 10 x 3 cm wird ein Klebefilm von ca. 2 cm Breite und 2 mm Dicke aufgetragen. Anschließend werden in die Mitte des Klebefilms kleine Kugeln von 2 mm Durchmesser gedrückt, um die exakte Dicke des Klebefilms zu gewährleisten. Der Abstand der Kugeln voneinander beträgt ca. 2 cm, die Kugeln befinden sich auf einer gedachten, geraden Linie in der Mitte des aufgetragenen Klebstoffstreifens.

Nach dem Einbringen der Kugeln in die Klebstoffschicht wird eine Aluschiene (anodisiertes Aluminium) von 15 x 1,5 cm auf die Kugeln gedrückt. Die verwendete Aluschiene besitzt an einer Seite eine Bohrung von 8 mm Durchmesser. Diese Schiene wird in der Art auf die Klebstoffschicht aufgesetzt, dass die Bohrung nicht in der Klebstoffschicht liegt, die Abschlusskante der Schiene aber mit einer eingezeichneten Markierung abschließt. Für die Messung wird der Prüfkörper an einer Federwaage aufgehängt, und zwar wird der Haken der Federwaage in die Bohrung auf der Holzfläche eingehakt.

Anschließend wird langsam und gleichmäßig, in senkrechter Richtung zur Holzplatte, an der Aluschiene gezogen, bis ein Abrutschen der Schiene von der Klebstoffschicht zu erkennen ist. Der Wert, an dem die Schiene ins Rutschen gerät, wird an der Federwaage abgelesen. Der gemessene Wert repräsentiert die Anfangshaftung für eine Fläche von 15 cm². Teilt man den erhaltenen Wert durch 15, so erhält man den Anfangshaftungswert in g/cm².

### Methode zur Bestimmung der Fließgrenze

Die Fließgrenze wurde mit einem deformationsgesteuerten ARES Rheometer (TA2000) der Firma TA Instruments bestimmt. Es wurde bei Raumtemperatur (25°C) mit einem Platte/Platte-System (d = 15 mm; Spalt = 1 mm) gemessen. Sonstige Versuchsbedingungen: Scherratensweep 0.01/s-10/s, Fließgrenze ermittelt bei Scherrate <=0,8/s.

### Methode zur Bestimmung der Zugscherfestigkeit

Die Zugscherfestigkeit wurde nach DIN EN 205 bestimmt.

### BEISPIELE

### Beispiele 1 bis 6

Aus den in der Tabelle 1 aufgeführten Komponenten (in Gew.-Teilen) wurden Monodose-Montageklebstoffe durch Vermischen unter Erhitzen auf 70 bis 80 °C hergestellt.

**Tabelle 1**

| Beispiel | B1 | B2 | V1 | V2 | A1 | A2 | A3 | A4 |
|---|---|---|---|---|---|---|---|---|
| 1 | 37,2 | 26,5 | 15,7 | 10,8 | 0,5 | 2,9 | 5,4 | 1,0 |
| 2 | 35,4 | 25,2 | 15,1 | 14,9 | 0,5 | 2,8 | 5,1 | 0,9 |
| 3 | 33,8 | 24,0 | 14,6 | 18,7 | 0,4 | 2,7 | 4,9 | 0,9 |
| 4 | 32,3 | 23,0 | 14,1 | 22,1 | 0,4 | 2,6 | 4,7 | 0,9 |
| 5 | 31,0 | 22,0 | 13,6 | 25,3 | 0,4 | 2,4 | 4,5 | 0,8 |
| 6* | 48,0 | 26,5 | 15,7 | 0 | 0,5 | 2,9 | 5,4 | 1,0 |

| | | | | | | | | |
|---|---|---|---|---|---|---|---|---|
| * = Vergleichsbeispiel mit geringer Anfangshaftung und geringerer Fließgrenze B1: Trimethoxysilanterminierter Polyether auf Basis eines Polypropylenetherpolyols der Molmasse 18000 (Acclaim 18200 der Firma Bayer MaterialScience + gamma-Isocyanatopropyltrimethoxysilan der Firma Wacker); B2: Trimethoxysilanterminierter Polyether auf Basis eines Polypropylenetherpolyols der Molmasse 2000 (Acclaim 2200N der Firma Bayer MaterialScience + gamma-Isocyanatopropyltrimethoxysilan der Firma Wacker); V1: Aerosil 200 (pyrogene Kieselsäure, BET-Oberfläche 200 m²/g, Hersteller: Degussa); V2: Rilanit Plus (Polyamidwachs, Hersteller: Cognis); A1: Diaminopropyltrimethoxysilan (Geniosil GF 91 der Firma Wacker); A2: Vinylsilantrimethoxysilan (Geniosil XL10, Hersteller Wacker); A3: Aminopropyltrimethoxysilan (Geniosil GF 96, Hersteller Wacker); A4: Diazabicyclo[5.4.0]undec-7-en (Nitrol DBU). | | | | | | | | |

**Tabelle 2**

| Rezeptur aus Beispiel | Fließgrenze [Pa] | Anfangshaftung [g/cm²] | Zugscherfestigkeit [N/mm²] Holz/Holz |
|---|---|---|---|
| 1 | 4000 | 167 | 4,0 |
| 2 | 6000 | 240 | 3,9 |
| 3 | 8000 | 313 | 3,3 |
| 4 | 10500 | 407 | 3,2 |
| 5 | 12000 | 467 | 2,8 |
| 6* | 850 | 15 | 3,4 |

| | | | |
|---|---|---|---|
| *Vergleichsbeispiele | | | |

## Patentansprüche

1. Ein-Komponenten-Montageklebstoff, der eine Anfangshaftung von mehr als 30 g/cm², bestimmt mittels der in der Beschreibung angegebenen Methode, aufweist und welcher mindestens ein Bindemittel, wobei das Bindemittel gewählt ist aus der Gruppe bestehend aus Polyurethan-Präpolymeren und über Silylgruppen vernetzenden Systemen, und mindestens ein Verdickungsmittel und/oder mindestens einen Füllstoff enthält, wobei mit dem mindestens einen Verdickungsmittel und/oder mindestens einen Füllstoff die Fließgrenze des Montageklebstoffs auf einen Wert von mindestens 1500 Pa eingestellt wird, bestimmt mit einem deformationsgesteuerten ARES Rheometer (TA2000) der Firma TA Instruments mit einem Platte/Platte-System mit d = 15 mm, Spalt = 1 mm und Scherratensweep = 0,01/s-10/s bei 25°C und einer Scherrate <=0,8/s.

2. Ein-Komponenten-Montageklebstoff gemäß Anspruch 1, **dadurch gekennzeichnet, dass** dieser knetfähig ist.

3. Ein-Komponenten-Montageklebstoff gemäß einem oder mehreren der Ansprüche 1 oder 2, **dadurch gekennzeichnet, dass** dieser 10 bis 75 Gew.-% mindestens eines Bindemittels bezogen auf die Gesamtmasse des Ein-Komponenten-Klebstoffs enthält.

4. Ein-Komponenten-Montageklebstoff gemäß einem oder mehreren der Ansprüche 1 bis 3, wobei als Verdickungsmittel ein oder mehrere Verbindungen gewählt werden aus der Gruppe bestehend aus Agar-Agar, Carrageen, Tragant, Gummi Arabicum, Alginaten, Pektinen, Polyosen, Guar-Mehl, Johannisbrotbaumkernmehl, Stärke, Dextrinen, Gelatine, Casein, Carboxymethylcellulosen und anderen Celluloseethern, Kernmehlethern, gehärtetem Rizinusöl, Stearinsäure, Polyacryl- und Polymethacrylaten, Vinylpolymeren, Polycarbonsäuren, Polyethern, Polyiminen, Polyamiden, Polykieselsäuren, Tonmineralien und Kieselsäuren.

5. Ein-Komponenten-Montageklebstoff gemäß einem oder mehreren der Ansprüche 1 bis 4, wobei als Füllstoff ein oder mehrere anorganische Füllstoffe gewählt werden aus der Gruppe bestehend aus Silikaten, Carbonaten, Sulfaten, synthetischen oder natürlichen Kieselsäuren, Graphit und Eisenglimmer.

6. Ein-Komponenten-Montageklebstoff gemäß einem oder mehreren der Ansprüche 1 bis 5, wobei 5 bis 50 Gew.% mindestens eines Verdickers und 0 bis 50 Gew.% mindestens eines Füllstoffs enthaltend sind und die Summe aus Verdicker und Füllstoff 50 Gew.%, vorzugsweise 45 Gew.-% nicht überschreitet und 20 Gew.-%, vorzugsweise 25 Gew.% nicht unterschreitet, wobei sich alle Gew.%-Angaben auf die Gesamtmasse des Montageklebstoffs beziehen.

7. Ein-Komponenten-Montageklebstoff gemäß einem oder mehreren der Ansprüche 1 bis 6, wobei ein oder mehrere Verdickungsmittel und ein oder mehrere Füllstoffe enthalten sind.

8. Ein-Komponenten-Montageklebstoff gemäß einem oder mehreren der Ansprüche 1 bis 7, wobei es sich beim Verdickungsmittel um Kieselsäure und/oder ein Amidwachs und beim Füllstoff um Calciumcarbonat handelt.

9. Ein-Komponenten-Montageklebstoff gemäß einem oder mehreren der Ansprüche 1 bis 8, wobei es sich beim Ein-Komponenten-Klebstoff um ein wässriges System, ein lösemittelhaltiges System oder ein gemischt wässrig-lösemittelhaltiges System handelt.

10. Ein-Komponenten-Montageklebstoff gemäß einem oder mehreren der Ansprüche 1 bis 9 weiterhin enthaltend einen Härtungskatalysator, Haftvermittler, Farbstoffe, Pigmente und Weichmacher.

11. Verfahren zur Herstellung eines Ein-Komponenten-Montageklebstoff gemäß einem oder mehreren der Ansprüche 1 bis 10, wobei die Bestandteile des Ein-Komponenten-Montageklebstoffs, gegebenenfalls in gelöster, vordispergierter, voremulgierter oder geschmolzener Form gegebenenfalls bei erhöhter Temperatur miteinander vermischt werden.

## Claims

1. A one-component structural adhesive that has an initial adhesion of more than 30 g/cm², determined by means of the method cited in the description, and that comprises at least one binder, wherein the binder is selected from polyurethane prepolymers and systems that crosslink through silyl groups, and at least one thickening agent and/or at least one filler, wherein the flow limit of the structural adhesive is adjusted with the at least one thickening agent and/or at least one filler to a value of at least 1500 Pa, determined with a deformation driven ARES rheometer (TA2000) of the TA Instruments company with a plate/plate system with d = 15 mm, gap = 1 mm and shear rate sweep = 0.01/s-10/s at 25°C and a shear rate ≤ 0.8/s.

2. The one-component structural adhesive according to Claim 1, **characterised in that** it is kneadable.

3. The one-component structural adhesive according to one or more of Claims 1 or 2, comprising 10 to 75 wt % of at least one binder, based on the total mass of the one-component adhesive.

4. The one-component structural adhesive according to one or more of Claims 1 to 3, wherein one or more compounds from the group made up of agar-agar, carrageen, tragacanth, gum arabic, alginates, pectins, polyoses, guar flour, locust bean flour, starch, dextrins, gelatins, casein, carboxymethyl celluloses and other cellulose ethers, seed flour ethers, hydrogenated castor oil, stearic acid, polyacrylates and polymethacrylates, vinyl polymers, polycarboxylic acids, polyethers, polyimines, polyamides, polysilicic acids, clay minerals, and silicic acids are selected as the thickening agent.

5. The one-component structural adhesive according to one or more of Claims 1 to 4, wherein one or more inorganic fillers from the group consisting of silicates, carbonates, sulfates, synthetic or natural silicic acids, graphite, and micaceous haematite are selected as the filler.

6. The one-component structural adhesive according to one or more of Claims 1 to 5, comprising 5 to 50 wt % of at least one thickener and 0 to 50 wt % of at least one filler, and the sum of thickener and filler does not exceed 50 wt %, by preference 45 wt %, and does not fall below 20 wt %, by preference 25 wt %, wherein all indications of wt % refer to the total mass of the structural adhesive.

7. The one-component structural adhesive according to one or more of Claims 1 to 6, comprising one or more thickening agents and one or more fillers.

8. The one-component structural adhesive according to one or more of Claims 1 to 7, wherein the thickening agent is silicic acid and/or an amide wax, and the filler is calcium carbonate.

9. The one-component structural adhesive according to one or more of Claims 1 to 8, wherein the one-component adhesive is an aqueous system, a solvent-containing system or a mixed aqueous/solvent-containing system.

10. The one-component structural adhesive according to one or more of Claims 1 to 9, further comprising a curing catalyst, adhesion promoters, dyes, pigments, and plasticisers.

11. A method for manufacturing a one-component structural adhesive according to one or more of Claims 1 to 10, wherein the constituents of the one-component structural adhesive are blended with one another, optionally in dissolved, pre-dispersed, pre-emulsified, or molten form, optionally at elevated temperature.

## Revendications

1. Colle d'assemblage à un seul composant, qui présente une adhérence initiale supérieure à 30 g/cm², que l'on détermine au moyen du procédé indiqué dans la description, et qui contient au moins un liant, le liant étant choisi parmi le groupe constitué par des prépolymères de polyuréthane et par des systèmes de réticulation via des groupes silyle, et au moins un épaississant et/ou au moins une substance de charge, la limite d'écoulement de la colle d'assemblage étant réglée, avec ledit au moins un épaississant et/ou ledit au moins une substance de charge, à une valeur d'au moins 1500 Pa, que l'on détermine avec un rhéomètre ARES (TA2000) à déformation imposée, de la firme TA Instruments comportant un système à plaques parallèles avec d = 15 mm, fente = 1 mm et balayage du taux de cisaillement = 0,01/s-10/s à 25 °C et un taux de cisaillement <= 0,8/s.

2. Colle d'assemblage à un seul composant selon la revendication 1, **caractérisée en ce qu'**elle peut être malaxée.

3. Colle d'assemblage à un seul composant selon une ou plusieurs des revendications 1 ou 2, **caractérisée en ce qu'**elle contient de 10 à 75 % en poids d'au moins un liant, rapportés à la masse totale de l'adhésif à un seul composant.

4. Colle d'assemblage à un seul composant selon une ou plusieurs des revendications 1 à 3, **caractérisée en ce que** l'on sélectionne, à titre d'épaississant, un ou plusieurs composés parmi le groupe constitué par l'agar-agar, le carraghénane, la gomme adragante, la gomme arabique, les alginates, les pectines, les polyoses, la farine de guar, la farine de graines de caroube, l'amidon, les dextrines, les gélatines, la caséine, des carboxyméthylcelluloses et d'autres éthers cellulosiques, des éthers de farines de graines, de l'huile de ricin durcie, l'acide stéarique, des polyacrylates et des polyméthacrylates, des polymères vinyliques, des acides polycarboxyliques, des polyéthers, des polyimines, des polyamides, des acides polysiliciques, des matières minérales à base d'argile et des acides siliciques.

5. Colle d'assemblage à un seul composant selon une ou plusieurs des revendications 1 à 4, **caractérisée en ce que** l'on sélectionne, à titre de substance de charge une ou plusieurs substances de charge inorganiques parmi le groupe constitué par des silicates, des carbonates, des sulfates, des acides siliciques synthétiques ou naturels, du graphite et du mica de fer.

6. Colle d'assemblage à un seul composant selon une ou plusieurs des revendications 1 à 5, **caractérisée en ce qu'**elle contient de 5 à 50 % en poids d'au moins un épaississant et de 0 à 50 % en poids d'au moins une substance de charge, la somme de l'épaississant et de la substance de charge ne dépassant pas vers le haut 50 % en poids, de préférence 45 % en poids et ne dépassant pas vers le bas 20 % en poids, de préférence 25 % en poids, toutes les indications en % en poids se rapportant à la masse totale de la colle d'assemblage.

7. Colle d'assemblage à un seul composant selon une ou plusieurs des revendications 1 à 6, **caractérisée en ce qu'**elle contient un ou plusieurs épaississants et une ou plusieurs substances de charge.

8. Colle d'assemblage à un seul composant selon une ou plusieurs des revendications 1 à 7, **caractérisée en ce que**, en ce qui concerne l'épaississant il s'agit d'acide silicique et/ou d'une cire d'amide, et en ce qui concerne la substance de charge, il s'agit de carbonate de calcium.

9. Colle d'assemblage à un seul composant selon une ou plusieurs des revendications 1 à 8, **caractérisée en ce que**, en ce qui concerne l'adhésif à un seul composant il s'agit d'un système aqueux, d'un système contenant un solvant ou encore d'un système mixte aqueux-contenant un solvant.

10. Colle d'assemblage à un seul composant selon une ou plusieurs des revendications 1 à 9, contenant en outre un catalyseur du durcissement, un agent améliorant l'adhérence, des colorants, des pigments et des plastifiants.

11. Procédé pour la préparation d'une colle d'assemblage à un seul composant selon une ou plusieurs des revendications 1 à 10, dans lequel on mélange les uns avec les autres les constituants de l'adhésif d'assemblage à un seul composant le cas échéant sous forme dissoute, prédispersée, préémulsifiée ou portée à fusion, le cas échéant à une température élevée.
